# EUROPEAN PATENT APPLICATION

(11) **EP 0 740 095 A1**
(43) Date of publication of application: **30.10.1996**
(21) Application number: 96830205.9
(22) Date of filing: 11.04.1996
(51) Int. Cl.: F16K 17/38, F17C 13/12

(54) **Device to intercept and regulate a flow of gas with a built-in thermal valve**

(30) Priority: 28.04.1995 IT BS950038 U; 13.10.1995 IT BS950090 U
(71) Applicant: NOVA COMET S.r.l., I-25030 Torbole Casaglia (Brescia) (IT)
(72) Inventor: Ravazzolo, Romano, 25100 Brescia (IT)
(74) Representative: Manzoni, Alessandro

(57) **Abstract**

The present invention pertains to a device to supply a flow of gas which, along the kinematic mechanism going from a pressure regulator to the shutter, in a union to which the regulator is coupled, comprises a fuse element (18, 118) in a plastic material that normally keeps the shutter in an open position and that softens getting deformed under the thrust of the shutter until said shutter closes on the relative valve seat when there is an increase in temperature affecting the union.

## Description

The present invention concerns devices to control the supply of gas and it specifically pertains to a device with a built-in thermal valve.

The constant aim of research is to find elements that can improve the safety of devices to distribute gas in general coming from bottles or other containers.

The concept of the thermal valve is known. It entails the use of a fuse element which at a set temperature triggers and acts on the gas interception system. In other words, the thermal valve is composed of a fuse element, usually in a plastic material, set along a gas pipe, subject to the thrust of a spring shutter and such as to keep the shutter normally in an open position. The fuse element, if the temperature close to it increases, softens and, under the thrust of the spring shutter, it deforms far enough to allow the shutter to close and therefore stop the flow of gas.

In the devices known to date (for example by IT-A-1232771) the thermal valve has been fitted in pressure regulators which are applied to the union of the gas bottles or containers. In the valve applied onto the bottle, especially with the quick coupling or clip-on system (known for example by Utility model IT-217525) there is an interceptor shutter normally pushed closed by a spring against a valve seat, and in the body of the regulator, concentrically to its connection, there is a stem that, controlled by a cam, may cause the interceptor shutter to move open and closed in the union when the regulator is fitted onto the bottle.

For supplying gas from the bottle towards the facility through the regulator, the stem is controlled and moved so as to keep the shutter open in the union of the bottle.

It is an object of the present invention to equip a gas pressure regulator, having a quick (clip-on) coupling device for the union of a gas bottle, with a thermal valve of the type and with the same function as the one described in IT-A-1232771.

A further object of this invention is to propose a pressure regulator incorporating a thermal valve along the stem acting as a transmission member between the eccentric pin on the regulator and the shutter in the union. This is to allow the shutter to return automatically into closed position in the case of an increase in temperature leading to a softening and deformation of the thermal valve when the regulator is in communication with the bottle.

Alternatively, the thermal valve can be applied, not in the pressure reduction unit, but on the very interception shutter in the union of the gas bottle, that is to say in the bottle closure and interception system.

This application is especially advantageous since it allows the person managing the gas distribution to have the certainty, right from the bottle being delivered, that the user uses the safety system, without therefore needing to check the regulator which normally belongs to the user and is difficult to check. The pressure regulator, on the other hand, can have its own thermal valve in which case there will be double thermal safety, one on the bottle and one on the regulator, clearly with no incompatibility or problems, indeed for greater reliability of the assembly.

The device to intercept and regulate gas distribution proposed herein is substantially in conformity with claim 1. It shall anyhow be described more in detail by making reference to the accompanying drawings which illustrate a preferred embodiment of the invention.

In the drawings:
Figure 1 is cross-sectional view of an example of a regulator designed to incorporate a thermal valve;
Figure 2 is an enlarged detail of Fig. 1 with the built-in thermal valve at the level of the thrust stem for opening/closing;
Figure 3 is a partial cross-sectional view of the regulator applied on the union of a bottle complete with a thermal valve; and
Figure 4 is an enlarged detail of Fig. 3 at the level of the thermal valve.

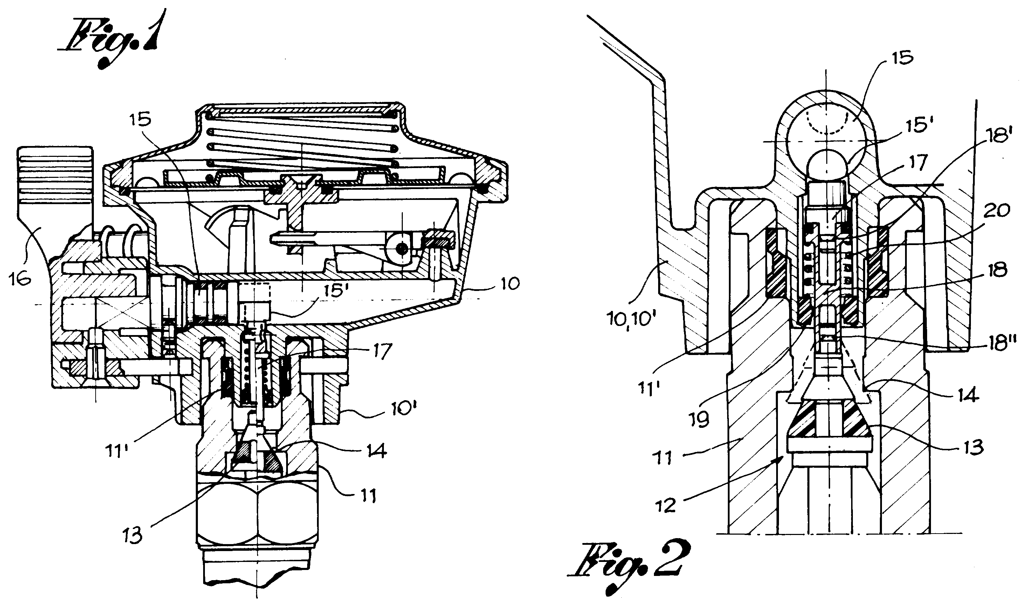

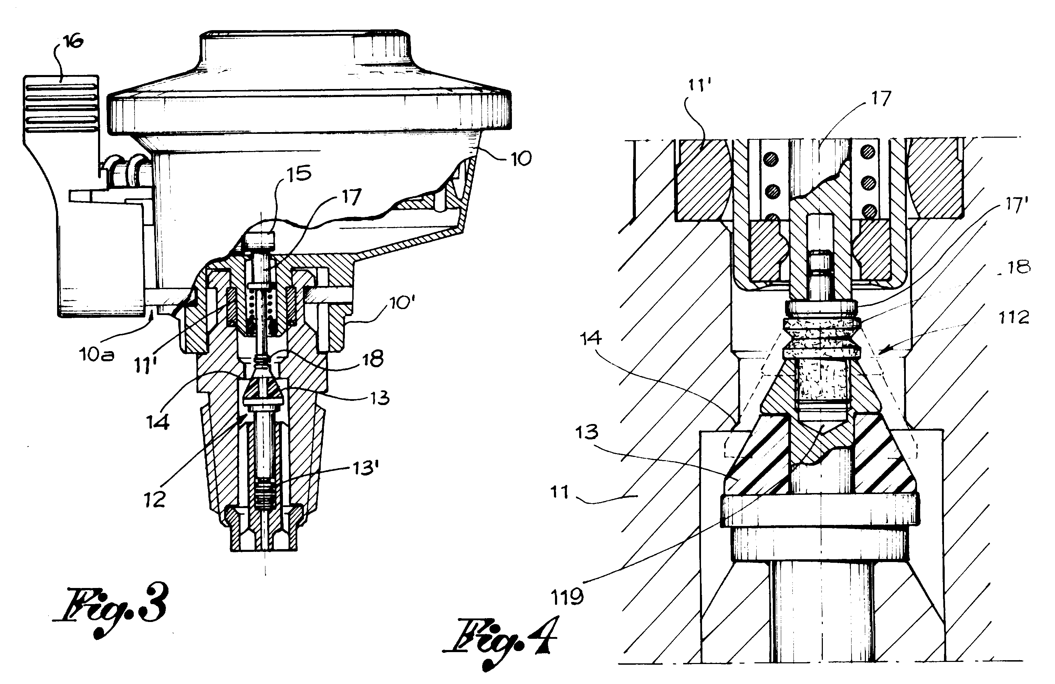

The above mentioned drawings indicate with reference numeral 10 the body of a gas pressure regulator having at its base a tubular portion 10Õ which is coupled and fixed in a known manner, with a seal 11Õ placed in between, with a union 11 of a gas bottle or container - not shown. The union 11 incorporates a valve 12 opening/closing the outlet of gas from the bottle towards the regulator 10. Said valve consists of a valve seat 14 and an interception shutter 13 pushed against the seat 14 by a spring 13Õ - see Fig. 3 -.

The body of the regulator 10 is provided with a pin with an eccentric portion 15Õ equipped with a control lever 16 and designed to move a stem 17 axially which is concentric with the tubular portion 10Õ and interacts with the shutter 13 in the union 11.

Hence, by turning the pin, its eccentric portion 15 is engaged on the stem 17 moving it axially to determine a corresponding movement of the shutter 13 opening/closing.

It is to be noted that the regulator 10 is fixed to the union with a connection device 10a operated by the same lever 16 as described in the above mentioned utility model.

In accordance with the invention, in a first embodiment - see Fig. 2 - in the same axis as the stem 17 and the shutter 13, between these two elements, a fuse element 18 is placed and held with the function of a thermal valve. The fuse element 18 is in a suitable plastic material. It is centred on the stem and shutter and is held peripherally by a seal 19. To make room for the fuse element 18, the stem 17 has been suitably shortened compared to that of a valve of the same type, but without the fuse element, as shown in Fig. 1. The fuse element 18 is then preferably hooked at 18Õ, 18Ó onto the stem 17 and the shutter 13 respectively so that the movement of one follows the movement of the other. A spring 20 placed around the fuse element 18 - see Fig. 2 - acts in the direction of keeping the stem constantly moved towards the eccentric pin 15, 15Õ and to assure the shutter 13 closes on the valve seat 14 when the stem is not engaged and thrust by the eccentric portion 15Õ of said pin 15.

In another embodiment - see Figs. 3 and 4 - a fuse element 118 with the function of a thermal valve is applied on top of the shutter 13, and the stem 17 rests on said fuse element directly or through a ferrule 17Õ in between.

The fuse element 118 is in a suitable plastic material, centred and held on the shutter, preferably in a hole 119 made in its head. The hole 119 having such a depth as to be able to receive at least part of the fuse material when this softens and deforms.

Then, when the regulator is applied onto the union and the valve 12 of this is open, the fuse element 118 is between the shutter 13 and the stem 17.

In normal temperature conditions, the fuse element 18 or 118, even if subject to a thrust, or to a compression, between the stem 17 and the shutter 13, keeps its structure unchanged and keeps the shutter constantly in the open position at a distance from the respective valve seat so as not to affect the flow of gas from the bottle.

Whereas, if for any cause or reason there is heating and therefore an increase in temperature concerning the union, the fuse element in plastic material 18 or 118 tends to soften and withdraw axially under the thrust of the shutter 13 and due to the reaction of the stem. On reaching a certain temperature threshold, the softening of the element in plastic material 18 is such that the axial thrust of the shutter causes a deformation and crushing of the element with the shutter consequently moving progressively towards the valve seat. And this continues until the shutter closes on the valve seat. In this condition the flow of fluid towards the user device will automatically break off.

The supply of fluid will therefore be blocked indicating overheating and therefore the trouble occurring, forcing the valve elements to be replaced.

With an appropriate choice of the plastic material forming the fuse element 18 and its physical configuration it will be simple and practical to establish any temperature threshold the valve must automatically trigger at to block off the flow of fluid.

Finally, it should be noted that the device can incorporate both thermal valves 18 and 118 in the regulator and on the shutter in the union at the same time.

## Claims

1. A device to intercept and regulate a flow of gas comprising a pressure regulator to be connected to a union of a gas bottle by means of a quick coupling device, where in said union there is a spring shutter (13, 13Õ) to open/close a valve seat (14) for the passage of the fluid from the bottle to the regulator, and where in the body of said regulator a stem (17) is fitted controlled by a rotating eccentric pin (15) designed to cause the shutter (13) to move open/closed, **characterized in that** it comprises a fuse element (18, 118) in a plastic material applied along the kinematic mechanism extending from said eccentric pin (15, 15Õ) to said shutter (13, 13Õ) and designed to keep the shutter spaced from the valve seat in an open position when said stem is in the open position of the shutter and to soften and deform under the thrust of the shutter until said shutter closes on the relative valve seat when there is an increase in temperature affecting the device.

2. A device according to claim 1, wherein said fuse element (18) is placed between said stem (17) and said shutter (13), said fuse element (18) being centred on the stem (17) and shutter (13) and held peripherally by a seal (19).

3. A device according to claim 2, wherein said fuse element (18) is hooked and moves together with the stem and the shutter.

4. A device according to claim 1, wherein said fuse element (118) is held in a hole (119) made on the top of said shutter, and wherein said hole is deep enough to receive at least a part of the material of the fuse element when it softens.

5. A device according to claim 4, wherein said fuse element (118) applied onto the shutter rests directly or indirectly against the stem (17), said fuse element (118) extending between the stem (17) and the shutter (13) to keep them stably set apart when the temperature is under a set threshold.
